# FASCICULE DE BREVET EUROPEEN

(11) **EP 3 394 400 B1**
(45) Date de publication et mention de la délivrance du brevet: **26.08.2020**
(21) Numéro de dépôt: 16825478.7
(22) Date de dépôt: 12.12.2016
(51) Int. Cl.: F01D 25/16, F01D 25/24, F01D 25/28, F02K 3/06, F02C 7/20

(54) **TURBORÉACTEUR AVEC UN MOYEN DE REPRISE DE POUSSÉE SUR LE CARTER INTER-COMPRESSEURS**
TURBOSTRAHLTRIEBWERK MIT EINEM MITTEL ZUR KRAFTÜBERTRAGUNG AUF DAS GEHÄUSE DES ZWISCHENVERDICHTERS
TURBOJET ENGINE WITH A MEANS OF TRANSFERRING THRUST ON THE INTER-COMPRESSORS CASING

(30) Priorité: 24.12.2015 FR 1563322
(43) Date de publication de la demande: 31.10.2018
(73) Titulaire: Safran Aircraft Engines, 75015 Paris (FR)
(72) Inventeur: BORDONI, Nils, Edouard, Romain, 77550 Moissy-Cramayel (FR); BRAULT, Michel, Gilbert, Roland, 77550 Moissy-Cramayel (FR); CUVILLIER, Romain, Guillaume, 77550 Moissy-Cramayel (FR); KUBIAK, Guillaume, Patrice, 77550 Moissy-Cramayel (FR); NEGRI, Arnaud, Nicolas, 77550 Moissy-Cramayel (FR); NOWAKOWSKI, Nathalie, 77550 Moissy-Cramayel (FR)
(74) Mandataire: Gevers & Orès
(86) Numéro de dépôt international: PCT/FR2016/053332
(87) Numéro de publication internationale: WO 2017/109328

(56) Documents cités:
- EP-A2- 2 610 462
- WO-A1-2008/000924
- CA-A1- 2 929 947
- FR-A1- 3 007 458

## Description

### Domaine de l'invention

La présente invention concerne le domaine de la propulsion aéronautique. Elle porte sur la suspension d'un turboréacteur à un aéronef et plus particulièrement sur l'agencement des moyens assurant la transmission ou la reprise de la poussée fournie par le moteur à la structure de l'aéronef.

### Etat de la technique

L'état de la technique comprend notamment les documents CA-A1-2 929 947, EP-A2-2 610 462, WO-A2-2008/000924 et FR-A1-3 007 458.

Un turboréacteur multiflux conforme à une architecture connue de l'art antérieur comprend, d'amont en aval dans le sens du flux d'air le traversant, une soufflante et un générateur de gaz par lequel elle est entraînée en rotation. Ce dernier est formé d'au moins un compresseur, une chambre de combustion annulaire, au moins une turbine et une tuyère d'éjection des gaz de combustion. L'air comprimé par la soufflante est divisé en deux flux concentriques : un flux primaire central alimentant le générateur de gaz et un flux secondaire entourant ce dernier. Les deux flux peuvent être éjectés dans l'atmosphère séparément par des tuyères concentriques ou bien être mélangés en aval du générateur de gaz et éjectés dans l'atmosphère à travers une tuyère commune.

Le générateur de gaz est un moteur à turbine à gaz multi-corps, par exemple à double corps, avec deux rotors indépendants coaxiaux. Un premier corps à basse pression comprend un compresseur et une turbine, reliés par un premier arbre ; un second corps à haute pression comprend un compresseur et une turbine reliés par un second arbre coaxial au premier. La chambre de combustion est alimentée par l'air comprimé successivement par la soufflante, le compresseur à basse pression, BP, et le compresseur à haute pression, HP. Les gaz issus de la combustion sont détendus successivement dans la turbine à haute pression, HP, puis dans la turbine à basse pression, BP, avant d'être éjectés dans l'atmosphère par la tuyère aval. Les turbines mises en mouvement par les gaz de combustion entraînent en rotation les compresseurs respectifs et la soufflante dont l'arbre est relié à celui de la turbine à basse pression, BP. La soufflante peut être entraînée directement par l'arbre du corps BP mais selon une évolution des moteurs par l'intermédiaire d'un réducteur de vitesse lorsque sont visés des taux de dilution élevés, c'est à dire un rapport du flux secondaire sur le flux d'air primaire élevé. En effet, dans les turboréacteurs conventionnels avec une turbine liée directement à la soufflante, les taux de dilution sont limités notamment par la vitesse périphérique en tête des aubes de soufflante. Les architectures à turbosoufflante entraînée par l'intermédiaire d'un réducteur de vitesse et à taux de dilution très élevé - en anglais UHBR (ultra high bypass ratio) - répondent partiellement à ce problème en optimisant l'efficacité de la turbine à un régime de soufflante modéré.

Outre les rotors, le moteur comprend des organes statoriques pour assurer notamment les fonctions de support, de guidage des flux et de transmission des efforts.

Dans les turboréacteurs à double flux, une grande partie de la poussée est réalisée par le flux secondaire. La force de traction exercée par l'air ambiant sur le moteur s'applique en partie sur les aubes de soufflante, en partie sur les parois de tuyère. Le chemin des efforts depuis la soufflante est le suivant : les efforts axiaux appliqués sur les aubes de soufflante sont transmis par un palier de butée vers les parties fixes du moteur, puis remontés vers les suspensions du moteur que sont en particulier les deux bielles de reprise de poussée. Ces bielles sont communément situées dans la zone inter-veines, et les chapes de fixation des bielles sont angulairement positionnées à environ 45° du plan vertical. Il s'agit ici, essentiellement de la reprise des efforts axiaux de la poussée créée par la soufflante.

Dans cette architecture, les efforts passent par le carter intermédiaire ou inter-compresseurs avant d'être transmis à la suspension.

Sur un moteur à réducteur de vitesse entre l'arbre de turbine et celui de la soufflante, avec les architectures à taux de dilution élevé, UHBR cité plus haut, le chemin des efforts est agencé différemment.

Dans ce type d'architecture, le moteur comprend en plus du carter inter-compresseurs, un carter d'entrée situé entre la soufflante et le compresseur BP de manière à pouvoir supporter le poids du réducteur et les paliers. Le carter d'entrée est ainsi conçu pour supporter directement le réducteur, par exemple à train d'engrenages épicycloïdal. La présence du carter d'entrée a pour conséquence que la soufflante et l'arbre BP ne sont plus supportés par le carter inter-compresseurs mais par le carter d'entrée. Il s'ensuit que le carter d'entrée reprend également les efforts axiaux de l'arbre de soufflante par le palier qui supporte l'arbre de soufflante et les efforts axiaux de l'arbre BP par le palier de l'arbre BP. Il est à noter que les deux paliers sont choisis de manière à former des butées axiales et absorber les charges axiales. Des paliers à billes conviennent pour assurer cette fonction mais aussi d'autres paliers conviennent également. Par exemple, le rotor de soufflante peut être supporté par un palier double à rouleaux coniques qui vient en substitution d'un palier à rouleaux et d'un palier à billes tels que couramment employés.

Les bielles de reprise de poussée sont, quant à elles, de préférence maintenues attachées au carter inter-compresseurs, car leur montage sur le carter d'entrée ne serait pas avantageux. Pour cela il faudrait prévoir une extension de l'espace dans la zone inter-veines nécessaire à leur intégration. La longueur des bielles en serait accrue avec un impact sur leur masse. Par ailleurs la raideur des bielles serait à augmenter pour éviter les modes vibratoires. Enfin, leur intégration dans la zone du carter d'entrée viendrait en conflit avec l'installation des équipements, tels que le réservoir d'huile, la vanne de décharge et l'anneau de synchronisation de la commande des ailettes de stator à calage variable du compresseur.

Dans une telle architecture, les efforts axiaux passent ainsi par le carter d'entrée puis jusqu'au carter inter-compresseurs par le compresseur BP qui est interposé entre les deux carters. Cela n'est pas sans conséquence : le carter du compresseur BP a en soi une faible tenue mécanique et les efforts axiaux correspondant à la reprise de poussée sur ce carter sont susceptibles de le déformer avec pour effet d'un côté une augmentation des jeux en tête d'aube et une perte de rendement, et de l'autre côté une diminution des jeux en tête d'aube et un risque de contact rotor/stator.

La faible tenue mécanique du carter du compresseur BP peut-être compensée par un épaississement de celui-ci pour un même matériau avec pour conséquence une masse plus importante. Cependant, tant que des efforts y transitent, des déformations peuvent être observées avec les conséquences citées ci-dessus.

La présente invention a pour objectif de remédier à cet inconvénient.

### Exposé de l'invention

On parvient à réaliser cet objectif, avec un turboréacteur multiflux, selon les caractéristiques de la revendication 1, le turboréacteur multiflux comprenant :
a. une soufflante amont entraînée par un générateur de gaz,
b. le générateur de gaz comprenant un premier et un second compresseurs coaxiaux,
c. un carter d'entrée formant support des rotors de la soufflante et du premier compresseur,
d. un carter inter-compresseurs en aval du carter d'entrée, et formant support du rotor du second compresseur,
e. des moyens d'attache pour des bielles de reprise de poussée agencés sur le carter inter-compresseurs.

Conformément à l'invention, le turboréacteur est caractérisé par le fait qu'au moins une bielle de transmission d'efforts axiaux relie le carter d'entrée au carter inter-compresseurs.

La solution de l'invention consiste donc à créer un second chemin d'efforts, plus rigide que le carter du compresseur et par lequel transitent les efforts axiaux. On s'affranchit ainsi de l'obligation de renforcer le carter du compresseur tout en n'étant pas pénalisé par une augmentation de masse.

Conformément à un mode de réalisation, les deux carters sont reliés par au moins un doublet de bielles de transmission d'efforts axiaux non parallèles entre elles, telles qu'en V. Avantageusement, au moins l'une des attaches entre le carter et la bielle est à rotule. On s'assure ainsi que seuls les efforts de traction / compression transitent par la bielle.

De préférence également, la liaison comprend au moins trois doublets répartis autour de l'axe du moteur.

Cette disposition par doublets en V, permet, à partir de trois doublets sur la circonférence, de reprendre tous les efforts appelés à transiter entre les carters. Il s'agit :
- des efforts axiaux correspondant à la reprise de la poussée,
- des efforts tranchants que sont le poids du moteur ou les efforts inertiels du corps HP suspendu à ses extrémités,
- du couple de torsion sur l'axe moteur,
- du couple de flexion résultant du poids ou des efforts inertiels du corps HP suspendu à ses extrémités.

La reprise des efforts autres qu'axiaux permet d'améliorer la situation mécanique du moteur, en limitant par exemple la déformation du corps HP.

Cette solution permet donc de faire transiter tout type d'effort, en limitant l'encombrement du dispositif pour laisser suffisamment de place aux équipements situés au-dessus du compresseur BP.

Conformément à un mode de réalisation, au moins l'un des deux carters comprend deux parois radiales disposées perpendiculairement à l'axe, les deux parois étant reliées par des nervures orientées sensiblement dans l'axe. Avantageusement dans ce cas, au moins l'une des attaches de bielle au carter est située dans le prolongement de l'une des nervures. On assure une bonne répartition des efforts avec une liaison entre les nervures et la paroi formant des congés de répartition des efforts. Un congé est un raccord plus ou moins arrondi entre deux surfaces.

Selon un mode de réalisation particulier améliorant encore la répartition des charges sur les carters, au moins l'une des bielles est disposée dans le prolongement d'une nervure. De préférence, les deux bielles d'un doublet de bielles de transmission d'efforts axiaux sont disposées chacune dans le prolongement d'une nervure.

Conformément à une variante de réalisation, le turboréacteur comprenant au moins un doublet de bielles de transmission des efforts axiaux et le carter inter-compresseurs comprenant une paroi amont et une paroi aval, les bielles du doublet sont attachées à la paroi aval.

L'invention vise en particulier un turboréacteur dont la soufflante est entraînée par une turbine BP et qui comprend un réducteur de vitesse entre un arbre de la turbine BP et la soufflante. Le réducteur est par exemple constitué d'un train d'engrenages épicycloïdal. Le carter d'entrée est disposé de manière à former un support du mécanisme réducteur de vitesse. De préférence, au moins une partie des paliers supportant l'arbre de soufflante et l'arbre BP, respectivement, dans le carter d'entrée sont aptes à former des butées axiales.

Conformément à un mode de réalisation, le carter du compresseur est agencé de manière à être flottant. Par exemple on rend le carter flottant en le reliant à l'un des deux carters d'entrée et inter-compresseurs avec une liaison à jeu, de préférence à jeu aussi bien radial qu'axial, des moyens appropriés étant prévus pour assurer la continuité de la veine ainsi que l'étanchéité pour éviter toute fuite d'air. Ainsi, selon ce mode de réalisation et en raison de son caractère flottant, pendant le fonctionnement du moteur, aucun effort susceptible de le déformer ne transite par le carter d'u compresseur.

Ladite au moins une bielle de transmission d'efforts peut avoir une longueur variable ou ajustable. La longueur de la bielle est ainsi ajustable, en particulier au montage.

La présente invention concerne encore un procédé de montage d'un turboréacteur multiflux tel que décrit précédemment, comportant :
une étape d'assemblage du turboréacteur, et en particulier du carter d'entrée et du carter inter-compresseurs, et
une étape d'ajustement de la longueur d'au moins une bielle de transmission d'efforts axiaux qui relie le carter d'entrée au carter inter-compresseurs.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés.

Sur ces dessins :
La figure 1 représente schématiquement en coupe axiale un exemple d'architecture de moteur, conforme à l'invention ;
Les figures 2 et 3 représentent en perspective un carter inter-compresseurs seul, vu depuis l'aval et de côté;
La figure 4 illustre, vu en perspective, un moteur au niveau des carters d'entrée et inter-compresseurs, en partie arraché, avec les bielles conformes à l'invention ;
Les figures 5 et 6 montrent deux modes d'attache des bielles à une paroi de carter avec liaison à rotule ;
La figure 7 montre, vu en perspective, un agencement de doublet de bielles s'appuyant sur des nervures à l'intérieur du carter inter-compresseurs ;
La figure 8 montre une variante de liaison des bielles au carter inter-compresseurs ;
La figure 9 montre une variante de réalisation de carter inter-compresseurs avec une seule paroi radiale ;
La figure 10 montre une bielle de longueur variable.

### Description détaillée de modes de réalisation de l'invention

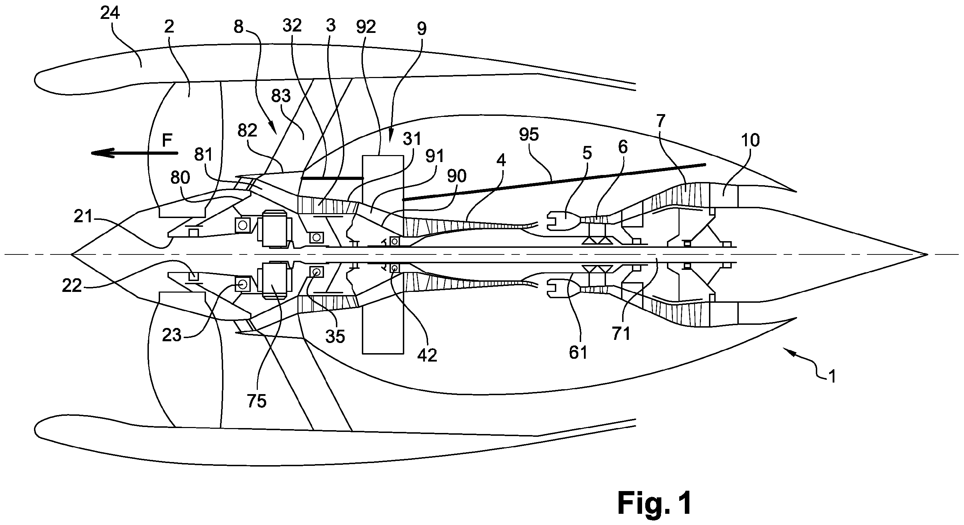

La figure 1 représente un turboréacteur 1 avec, d'amont en aval, une soufflante 2 et un générateur de gaz à double corps formé d'un premier compresseur 3, d'un second compresseur 4, d'une chambre de combustion 5, et de deux turbines en série 6 et 7. Le premier compresseur forme avec la turbine 7 à laquelle il est relié par un arbre de turbine 71, le corps à basse pression BP. Le second compresseur 4, forme avec la turbine 6 à laquelle il est relié par un arbre 61, le corps à haute pression HP. Les organes structuraux fixes comprennent le carter d'entrée 8 situé à l'entrée du générateur de gaz entre la soufflante 2 et le compresseur BP 3, le carter inter-compresseurs 9 entre le compresseur BP 3 et le compresseur HP 4. A l'aval, la transmission des efforts du moteur à la suspension est assurée par le carter d'échappement 10.

L'arbre 21 de la soufflante est monté à rotation dans deux paliers 22 et 23 dont le premier est par exemple à rouleaux et le second 23 près du carter est par exemple à billes et forme un palier de butée axiale. L'arbre 21 est relié à l'arbre 71 de la turbine BP 7 au travers d'un réducteur de vitesse 75, à train d'engrenages épicycloïdal. Cet arbre 71 est solidaire du rotor du compresseur BP 3 qui est monté rotatif dans le carter d'entrée 8 par l'intermédiaire d'un palier, par exemple à billes 35, apte à reprendre les efforts axiaux. Les trois paliers 22, 23 et 35 ainsi que le train d'engrenages 75 sont montés dans le moyeu 80 du carter d'entrée 8 et supportés par lui. Ainsi, le carter d'entrée reprend les efforts axiaux de l'arbre de soufflante avec le palier à billes 23 de l'arbre de soufflante et les efforts axiaux de l'arbre BP avec le palier à billes 35 de l'arbre BP.

Du moyeu 80 du carter d'entrée 8 s'étendent une pluralité de bras radiaux 81 qui traversent la veine du flux primaire et sont reliés entre eux par une pièce annulaire 82, intercalée entre la veine primaire et la veine secondaire. De cette pièce annulaire intercalaire 82 s'étendent une pluralité de bras radiaux 83 traversant la veine secondaire et reliant la pièce intercalaire 82 au carter de soufflante 24. Des moyens d'accrochage à la structure de l'aéronef sont éventuellement prévus dans le prolongement des bras 83 sur le carter de soufflante.

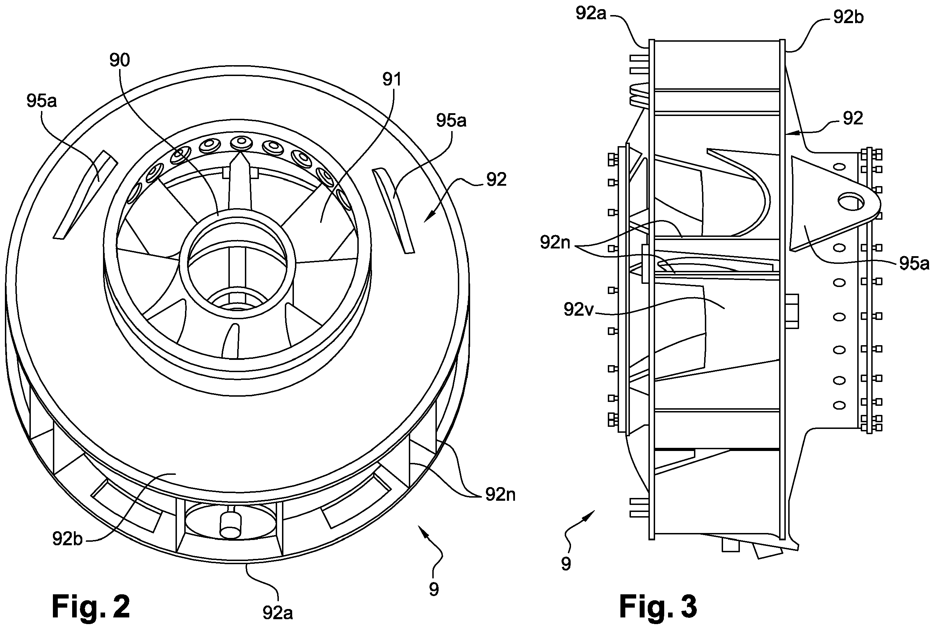

Le carter inter-compresseurs 9 est situé immédiatement en aval du compresseur BP 3 et en amont du compresseur HP 4. Il comprend un moyeu 90 traversé par l'arbre BP 71. Ce moyeu forme un support pour le palier 42 dans lequel vient prendre appui le tourillon d'extrémité du rotor du compresseur HP 4. Du moyeu 90 s'étendent une pluralité de bras radiaux 91 traversant la veine primaire. Les bras 91 sont reliés entre eux par une pièce annulaire 92. Cette pièce annulaire 92 du carter inter-compresseurs est le siège des attaches 95a pour les bielles 95 de reprise de poussée, agencées pour transmettre les efforts axiaux de poussée à la suspension du moteur. Un exemple de carter inter-compresseurs est décrit dans la demande de brevet FR 3 007 458 au nom du présent déposant. Ce carter est reproduit sur les figures 2 et 3. On observe que la pièce annulaire 92 du carter 9 est formée principalement d'une virole 92v définissant la paroi radialement extérieure de la veine primaire à ce niveau, et de laquelle s'étendent deux flasques radiaux transversaux par rapport à l'axe du moteur, l'un amont 92a, l'autre aval 92b. Des nervures 92n axiales réparties autour de l'axe relient les deux parois 92a et 92b. De préférence, les nervures sont disposées dans le prolongement des bras radiaux 91.

Les efforts axiaux, flèche F, sur les aubes de la soufflante résultant de la rotation de la soufflante sont transmis à l'arbre 21 de la soufflante puis de l'arbre au moyeu 80 par le palier à billes 23 qui forme une butée axiale. Le chemin des efforts passe dans le carter d'entrée 8 par la pièce intercalaire 82, puis par le carter 31 du compresseur BP 3, la pièce annulaire 92 du carter inter-compresseurs 9 et les bielles 95 de reprise de poussée qui y sont attachées.

Conformément à l'invention, des bielles 32 relient les deux pièces, intercalaire 82 et annulaire 92, des deux carters 8 et 9. Les bielles 32 sont de préférence fixées à leurs extrémités par des attaches à rotule de manière à ne transmettre que des efforts de compression et de traction.

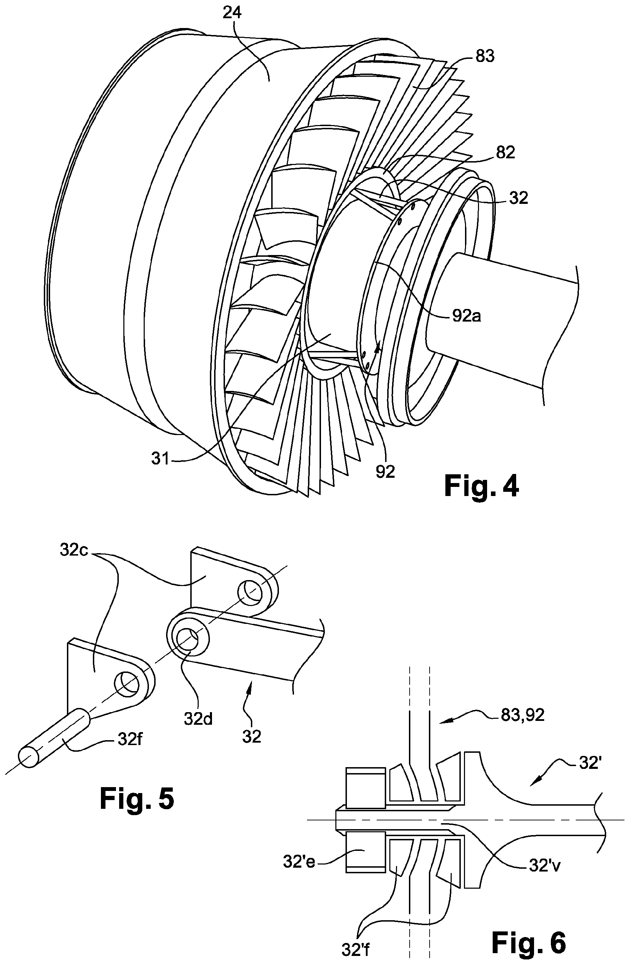

De préférence, les bielles sont disposées en doublets sur le pourtour du carter. Les bielles 32 des doublets ne sont pas parallèles entre elles et de préférence forment un V. La pointe du V est attachée au carter d'entrée, par exemple à la pièce intercalaire 82 du carter d'entrée 8 et les deux extrémités du V à la pièce annulaire 92 du carter inter-compresseurs 9, notamment à la paroi amont 92a, comme cela est visible sur le mode de réalisation de la figure 4. Inversement, selon un autre mode de réalisation, la pointe du V peut être positionnée en aval et les deux branches du V fixées au carter d'entrée. L'angle d'ouverture des deux bielles en forme de V est avantageusement d'au moins 20°, de préférence au moins 30°.

De préférence, la transmission des efforts est assurée par un ensemble d'au moins trois doublets, si possible répartis régulièrement sur la circonférence. Selon un mode de réalisation préféré, deux doublets sont à proximité des attaches des bielles de reprise de poussée qui sont à 10h et 2h, voir la figure 2 et le troisième doublet à 6h.

L'assemblage est alors hyperstatique en raison du double chemin d'efforts. Les efforts se repartissent en fonction du rapport de rigidité entre les deux chemins. Ainsi, si les bielles sont raides et le carter de compresseur souple, l'essentiel des efforts passera par les bielles. Le compresseur est alors déchargé et les déformations sont réduites.

Conformément à un mode de réalisation non représenté, le carter du compresseur est agencé de manière à être flottant. Par exemple on rend le carter flottant en le reliant à l'un des deux carters d'entrée et inter-compresseurs avec une liaison à jeu, de préférence à jeu aussi bien radial qu'axial, des moyens appropriés étant prévus pour assurer la continuité de la veine ainsi que l'étanchéité pour éviter toute fuite d'air. Ainsi, pendant le fonctionnement du moteur, aucun effort susceptible de le déformer ne transite par le carter d'u compresseur.

Un mode d'attache des bielles avec une liaison à rotule est représenté sur la figure 5. Une douille 32d est montée dans un logement ménagé à l'extrémité de la bielle 32. Cette douille est mobile en rotation autour de son centre en raison de sa surface extérieure sphérique, coopérant avec la surface également en portion de sphère de son logement dans la bielle. La douille est traversée par un axe 32f dont les extrémités sont logées dans des chapes solidaires de la pièce 82, 92 respectivement. Cette liaison permet la transmission des efforts dans la direction de la bielle.

La figure 6 montre une variante de réalisation de la liaison à rotule. Ici la bielle 32' est prolongée par une vis 32v, à son extrémité, qui est logée dans la paroi de la pièce 82, 92 sur laquelle elle est attachée. La paroi présente une surface sphérique coopérant avec des pièces d'usure 32'f intercalées entre l'écrou de serrage 32'e de la vis 32v et l'épaulement de l'extrémité de la biellette. Cette surface de contact sphérique autorise des déplacements angulaires, limités, tout en étant rigide le long de l'axe de la bielle 32'.

Selon le mode de réalisation de la pièce annulaire 92 présentée plus haut, avec des nervures 92n axiales reliant deux parois 62a et 62b de la pièce annulaire 92, les bielles peuvent être attachées de différentes façons, comme décrit plus haut.

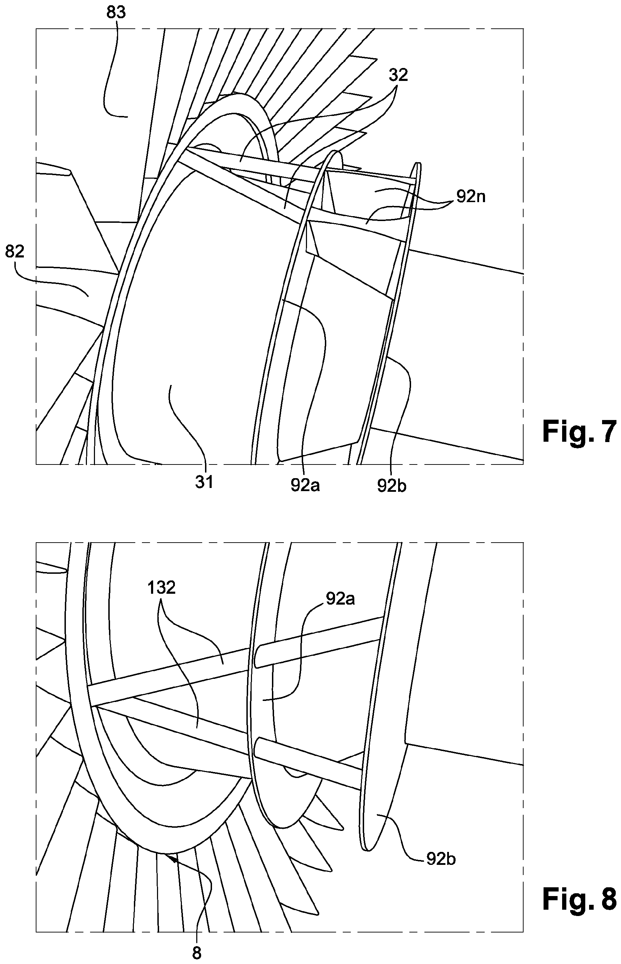

Conformément à un mode de réalisation de l'invention, les bielles sont attachées à la pièce annulaire du carter inter-compresseurs dans le prolongement des nervures 92n, comme on le voit sur la figure 7. La transmission des efforts entre les bielles et la pièce 92 peut ainsi s'opérer sans risque de déformation de l'anneau. Pour améliorer encore la répartition des efforts sur les parois, les nervures sont reliées aux parois 92a et 92b par des congés aussi larges que possible. Par ailleurs, en fonction de la disposition des nervures, il est possible d'inverser le V en positionnant la double attache du côté carter d'entrée, de manière à n'avoir qu'une seule nervure dans le carter inter-compresseurs dans le prolongement des attaches des bielles. Ainsi, en fonction de l'orientation de l'orientation du V, deux nervures sont placées dans l'alignement des attaches et correspondent aux deux branches du V ou une nervure pour correspondre à la pointe de celui-ci.

Conformément à une variante de réalisation, la bielle 132 de chaque doublet est montée en traversant la paroi amont 92a et en étant fixée directement à la paroi aval 92b, comme on le voit sur la figure 8.

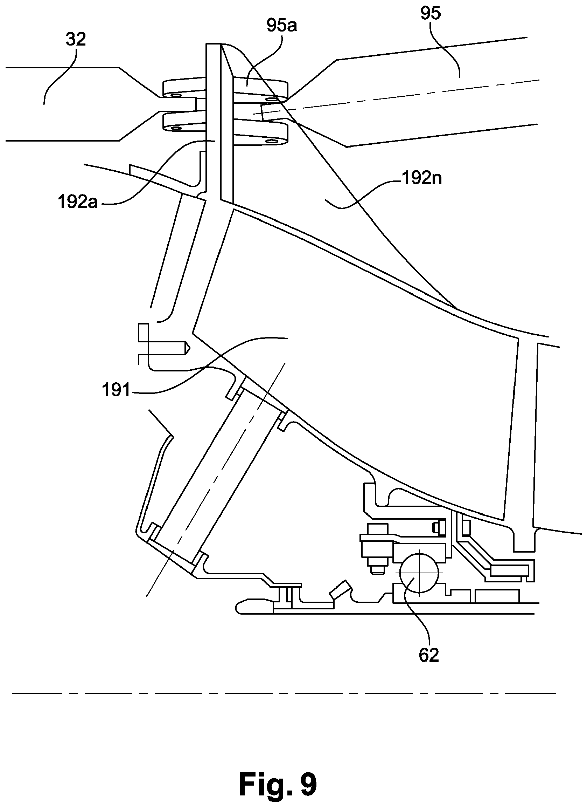

Conformément à une autre variante, l'invention peut être appliquée aussi à une pièce annulaire 192 de carter inter-compresseurs, reliant les bras radiaux 191 traversant la veine primaire, et présentant une seule paroi radiale 192a comme on le voit sur la figure 9. La paroi 192a est alors de préférence renforcée par une nervure 192n appropriée. La bielle de reprise de poussée et la bielle 32 sont montées de part et d'autre de la paroi radiale 192a.

L'invention s'étend aux autres variantes de réalisation non illustrées remplissant les mêmes fonctions.

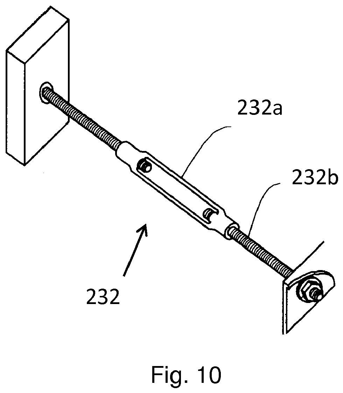

La figure 10 montre une bielle 232 de transmission d'efforts de longueur ajustable. Dans l'exemple représenté, la bielle 232 comprend un corps central 232a de forme allongée dont les extrémités longitudinales sont vissées sur des tiges filetées 232b solidaires respectivement du carter d'entrée 8 et du carter inter-compresseurs 9. En variante, elles peuvent être fixées aux carters selon les modes de fixation décrits aux figures 5 et 6.

La longueur de la bielle est ainsi ajustable, en particulier au montage. Lors d'un procédé de montage d'un turboréacteur multiflux tel que décrit précédemment, on procède d'abord à une étape d'assemblage du turboréacteur, et en particulier du carter d'entrée et du carter inter-compresseurs, puis on procède à une étape d'ajustement de la longueur de la ou des bielles de transmission d'efforts qui relie le carter d'entrée au carter inter-compresseurs. Plus précisément, les compresseurs 3, 4 peuvent être reliés aux deux carters 8, 9, et les bielles 232 peuvent être montées sur les carters. On règle ensuite leurs longueurs plus finement pour qu'elles correspondent aux dimensions exactes des compresseurs.

## Revendications

1. Turboréacteur multiflux, comprenant
a. une soufflante amont (2) entraînée par un générateur de gaz,
b. le générateur de gaz comprenant un premier (3) et un second (4) compresseurs coaxiaux, le premier compresseur (3) étant un compresseur basse pression et comportant un carter (31),
c. un carter d'entrée (8) formant support des rotors de la soufflante (2) et du premier compresseur (3),
d. un carter inter-compresseurs (9) en aval du carter d'entrée (8) et formant support du rotor du second compresseur (4),
e. des moyens (95a) d'attache pour des bielles (95) de reprise de poussée agencés sur le carter inter-compresseurs,
**caractérisé par le fait qu'**il comprend au moins une bielle (32, 32', 132) de transmission d'efforts axiaux reliant le carter d'entrée (8) au carter inter-compresseurs (9).

2. Turboréacteur selon la revendication précédente, comprenant au moins un doublet de bielles (32, 32', 132) de transmission d'efforts axiaux, non parallèles entre elles.

3. Turboréacteur selon la revendication précédente, comprenant au moins trois doublets desdites bielles (32, 32', 132) de transmission d'efforts axiaux répartis autour de l'axe du moteur.

4. Turboréacteur selon l'une des revendications 1 à 3, dont au moins l'une des attaches entre l'un des deux carters d'entrée et inter-compresseurs et la bielle (32, 32', 132) de transmission d'efforts axiaux est à rotule.

5. Turboréacteur selon l'une des revendications 1 à 4, dont au moins l'un des deux carters d'entrée et inter-compresseurs comprend deux parois (92a, 92b) radiales disposées perpendiculairement à l'axe, les deux parois étant reliées par des nervures (92n) orientées dans l'axe.

6. Turboréacteur selon la revendication précédente, dont au moins une des attaches de bielle au carter est située dans le prolongement d'une desdites nervures (92n).

7. Turboréacteur selon la revendication 1, comprenant au moins un doublet de bielles de transmission des efforts axiaux et le carter inter-compresseurs (9) comprenant une paroi amont (92a) et une paroi aval (92b), les bielles (132) du doublet étant attachées à la paroi aval (92b).

8. Turboréacteur selon l'une des revendications précédentes, la soufflante étant entraînée par une turbine BP (7), comprenant un réducteur de vitesse (75) entre un arbre (71) de la turbine BP et la soufflante (2).

9. Turboréacteur selon l'une des revendications précédentes dont au moins une partie des paliers supportant un arbre de soufflante et un arbre BP, respectivement, dans le carter d'entrée sont aptes à former des butées axiales.

10. Turboréacteur selon l'une des revendications précédentes dont ledit carter (31) du compresseur basse pression est flottant, notamment en étant relié à l'un des deux carters d'entrée et inter-compresseurs avec une liaison à jeu.

11. Turboréacteur selon l'une des revendications précédentes dont ladite au moins une bielle (232) de transmission d'efforts a une longueur variable.

## Patentansprüche

1. Mehrstrom-Turbostrahltriebwerk, umfassend
a. ein stromaufwärtiges Gebläse (2), das von einem Gasgenerator angetrieben wird,
b. den Gasgenerator, einen ersten (3) und einen zweiten (4) koaxialen Verdichter umfassend, wobei der erste Verdichter (3) ein Niederdruckverdichter ist und ein Gehäuse (31) beinhaltet,
c. ein Einlassgehäuse (8), das einen Träger für die Rotoren des Gebläses (2) und des ersten Verdichters (3) bildet,
d. ein Zwischenverdichter-Gehäuse (9) stromabwärts des Einlassgehäuses (8), das einen Träger für den Rotor des zweiten Verdichters (4) bildet,
e. Befestigungsmittel (95a) für Pleuelstange (95) zur Schubreaktion, die am Zwischenverdichter-Gehäuse angeordnet sind,
**dadurch gekennzeichnet, dass** es mindestens ein Pleuelstange (32, 32', 132) zur Übertragung von Axialkräften umfasst, die das Einlassgehäuse (8) mit dem Zwischenverdichter-Gehäuse (9) verbindet.

2. Turbostrahltriebwerk nach dem vorstehenden Anspruch, umfassend mindestens eine Dublette an Pleuelstangen (32, 32', 132) zur Übertragung von Axialkräften, die nicht parallel zueinander sind.

3. Turbostrahltriebwerk nach dem vorstehenden Anspruch, mindestens drei Dubletten an Pleuelstangen (32, 32', 132) zum Übertragen von Axialkräften umfassend, die um die Achse des Triebwerks verteilt sind.

4. Turbostrahltriebwerk nach einem der Ansprüche 1 bis 3, wobei mindestens eine der Befestigungen zwischen dem einen der beiden Gehäuse des Einlasses und des Zwischenverdichters und des Pleuelstange (32, 32', 132) zur Übertragung von Axialkräften, kugelgelenkig ist.

5. Turbostrahltriebwerk nach einem der Ansprüche 1 bis 4, wobei mindestens eines der beiden Gehäuse des Einlasses und des Zwischenverdichters zwei senkrecht zur Achse angeordnete radiale Wände (92a, 92b) umfasst, wobei die beiden Wände durch entlang der Achse ausgerichtete Rippen (92n) verbunden sind.

6. Turbostrahltriebwerk nach dem vorstehenden Anspruch, wobei sich mindestens eine der Befestigungen des Pleuelstange im Gehäuse in der Verlängerung einer der Rippen (92n) befindet.

7. Turbostrahltriebwerk nach Anspruch 1, umfassend mindestens eine Dublette an Pleuelstangen zur Übertragung der Axialkräfte, wobei das Zwischenverdichter-Gehäuse (9) eine stromaufwärtige Wand (92a) und eine stromabwärtige Wand (92b) umfasst, wobei die Pleuelstange (132) der Dublette an der stromabwärtigen Wand (92b) befestigt sind.

8. Turbostrahltriebwerk nach einem der vorstehenden Ansprüche, wobei das Gebläse von einer Niederdruckturbine (7) angetrieben wird, die ein Untersetzungsgetriebe (75) zwischen einer Welle (71) der Niederdruckturbine und dem Gebläse (2) umfasst.

9. Turbostrahltriebwerk nach einem der vorstehenden Ansprüche, wobei mindestens ein Teil der Lager, die jeweils eine Welle des Gebläses und eine Niederdruckwelle im Einlassgehäuse tragen, zur Bildung von axialen Anschlägen imstande sind.

10. Turbostrahltriebwerk nach einem der vorstehenden Ansprüche, wobei das Gehäuse (31) des Niederdruckverdichters schwimmend gelagert ist, insbesondere indem es mit einem der beiden Gehäuse des Einlasses und des Zwischenverdichters mit einer Verbindung mit Spiel verbunden ist.

11. Turbostrahltriebwerk nach einem der vorstehenden Ansprüche, wobei das mindestens eine Pleuelstange (232) zum Übertragen von Kräften eine variable Länge aufweist.

## Claims

1. Multi-flow turbofan engine comprising
a. an upstream ducted fan (2) driven by a gas generator,
b. the gas generator comprising a first (3) and a second (4) coaxial compressors, the first compressor (3) being a low pressure compressor and comprising a casing (31),
c. an inlet case (8) forming a support for the rotors of the ducted fan (2) and the first compressor (3),
d. an inter-compressor case (9) located downstream from the inlet case (8), and forming a support of the rotor of the second compressor (4),
e. attachment means (95a) for the thrust take-up rods (95) arranged on the inter-compressor case,
**characterised in that** it comprises at least one axial stress transmission rod (32, 32', 132) connecting the inlet case (8) to the inter-compressor case (9).

2. Turbofan engine according to the previous claim, comprising at least one pair of axial stress transmission rods (32, 32', 132) that are not parallel to one another.

3. Turbofan engine according to the previous claim, comprising at least three pairs of axial stress transmission rods (32, 32', 132) distributed around the axis of the engine.

4. Turbofan engine according to one of the claims 1 to 3, wherein at least one of the attachments connecting one of the two inlet and inter-compressor cases (8, 9) and the axial stress transmission rod (32, 32', 132) features a ball connection.

5. Turbofan engine according to one of the claims 1 to 4, wherein at least one of the two inlet and inter-compressor cases comprises radial walls (92a, 92b) arranged perpendicularly to the axis, the both walls being interconnected by ribs (92n) oriented in the direction of the axis.

6. Turbofan engine according to the previous claim, wherein at least one of the attachments securing the rod to the case is located in the extension of one of said ribs (92n).

7. Turbofan engine according to claim 1, comprising at least one pair of axial stress transmission rods and, the inter-compressor case (9) comprising an upstream wall (92a) and a downstream wall (92b), the rods (132) of the pair being attached to the downstream wall (92b).

8. Turbofan engine according to one of the previous claims, wherein the ducted fan is driven by a LP turbine (7) comprising a reduction gear (75) between a shaft (71) of the LP turbine and the ducted fan (2).

9. Turbofan engine according to one of the previous claims, wherein at least a part of bearings supporting a shaft of the ducted fan and a LP shaft, respectively, in the inlet case, are configured to form axial bearings.

10. Turbofan engine according to one of the previous claims, wherein said casing (31) of the low pressure compressor is configured to be floating, and secured to the inlet case or the inter-compressor case by means of a backlash connection.

11. Turbofan engine according to one of the previous claims, wherein said at least one stress transmission rod (232) features a variable length.
